# FASCICULE DE BREVET EUROPEEN

(11) **EP 4 551 829 B1**
(45) Date de publication et mention de la délivrance du brevet: **13.05.2026**
(21) Numéro de dépôt: 23741356.2
(22) Date de dépôt: 10.07.2023
(51) Int. Cl.: F16B 13/02, F16B 5/06, F16B 33/00

(54) **PIÈCE DE FIXATION**
BEFESTIGUNGSELEMENT
FASTENING DEVICE

(30) Priorité: 08.07.2022 FR 2207055
(43) Date de publication de la demande: 14.05.2025
(73) Titulaire: A. RAYMOND ET CIE, 38000 Grenoble (FR)
(72) Inventeur: MOUILLON, Romain, 38340 VOREPPE (FR); ALBARAN, Jean-Francois, 38760 Varces Allières et Risset (FR); OULES, Anthony, 38000 GRENOBLE (FR)
(74) Mandataire: Santarelli
(86) Numéro de dépôt international: PCT/EP2023/069062
(87) Numéro de publication internationale: WO 2024/008974

(56) Documents cités:
- EP-A1- 2 369 187
- WO-A1-2012/063660
- US-A- 3 466 966
- US-B2- 10 641 308
- US-B2- 7 004 702
- US-B2- 9 453 523

## Description

### Domaine technique de l'invention

La présente invention concerne une pièce de fixation, notamment un rivet destiné à être inséré et monté dans un trou pour fixer une première pièce sur une deuxième pièce, dit un support. Par exemple, la pièce de fixation permet d'assembler des matériaux durs (métal, acier, etc.) sur des matériaux durs pour l'automobile (pose d'accessoires, de pièces de carrosserie, etc.). Plus particulièrement, le rivet comporte une tige ayant des ailettes à double-tête.

### Technique antérieure

On connaît de l'état de la technique un rivet se présentant sous la forme d'une tige qui est munie à l'une de ses extrémités d'une tête. Par tête, on entend une partie de section plus grande que la section de la tige.

La tête de ce genre de pièce de fixation a une surface arrière destinée à être positionnée en regard d'une pièce à fixer. Préférentiellement, la tête comporte aussi une surface frontale opposée à la surface arrière.

La tige s'étend à partir de la surface arrière de la tête et destinée à être insérée dans un trou de fixation qui se situe dans des pièces à assembler par la pièce de fixation. La tête peut être en forme ronde ou rectangulaire. La section transversale de la tige peut être circulaires.

Cette pièce de fixation peut être utilisée par exemple pour fixer une pièce sur une structure ou un support. Afin de fixer correctement cette pièce de fixation de l'art antérieur, il est important que la pièce de fixation soit suffisamment enfoncée dans le trou de fixation. Selon la force exercée lors de l'enfoncement de la pièce de fixation, il est possible, par exemple, que la partie surface arrière de la tête de la pièce de fixation ne soit pas en contact avec la pièce à fixer, ainsi la pièce de fixation n'est pas bien montée, et il s'avère compliqué de vérifier l'état de fixation pour l'opérateur. Dans ce cas, la pièce de fixation peut sortir pendant utilisation des pièces à assembler.

Les progrès continuent d'être réalisés dans l'amélioration d'un système d'accrochage qui répond aux divers besoins tels que la rigidité, la robustesse de la fixation (rapport entre l'effort d'introduction et l'effort d'arrachement efficient), et bien d'autres encore. Un clip est connu de EP 2 369 187 A1.

### Exposé de l'invention

La présente invention vise à remédier à ces inconvénients, en proposant une pièce de fixation qui permet d'avoir une meilleure rigidité de fin de lame de clippage, une double accroche dans le filet et une meilleure possibilité de dévissage.

À cet effet, la présente invention concerne une pièce de fixation pour fixer une première pièce sur une deuxième pièce ayant un trou de fixation, selon la revendication 1, comportant un corps qui comporte :
- une tête ayant une surface arrière destinée à être positionnée en regard de la première pièce, et
- une tige s'étendant à partir de la surface arrière de la tête et destinée à être insérée dans le trou de fixation.

La tige comporte des ailettes d'accroche qui font saillie à partir de la tige, et qu'au moins une ailette d'accroche comporte, à son extrémité libre, une double-tête servant de filetage.

Dans un mode de réalisation, ladite au moins ailette d'accroche comporte une zone fine entre la tige et la double-tête.

Dans un mode de réalisation, la double-tête comporte une tête supérieure et une tête inférieure séparées par un espace intermédiaire, ces deux têtes définissant un pas de filetage.

Dans un mode de réalisation, les ailettes sont en forme de sapin.

La patte souple comprend un bras élastique dont une extrémité est solidaire du corps de la pièce de fixation. Le bras comporte un témoin.

Lorsque la pièce de fixation est installée dans la/les pièce(s) à fixer, le bras de la patte souple se déforme de sorte que le témoin se déplace pour entrer dans une position prédéfinie par rapport à la tête de la pièce de fixation.

Avec le mouvement du témoin, l'opérateur aperçoit visuellement que la pièce de fixation est bien montée.

Avantageusement, le témoin se déplace vers la tête de la pièce de fixation dans la position de montage. Normalement, la tête de la pièce de fixation et son alentour sont bien visibles, ainsi que l'opérateur vérifie plus clairement si le témoin entre bien dans la position prédéfinie.

Préférentiellement, la tige de la pièce de fixation comporte des ailettes faisant saillie à partir de la tige, servent de filetage qui empêche la sortie de la pièce de fixation depuis le trou de fixation, ainsi rend la fixation plus solide.

De préférence, la tête comporte au moins une encoche destinée à recevoir le témoin dans la position de montage de la pièce de fixation. L'encoche serve de la position prédéfinie où rentre le témoin. Cela permet une indication plus clairement visible pour l'opérateur, surtout d'une vue de dessus. Une fois que le témoin rentre dans l'encoche, l'opérateur sait visuellement que la pièce de fixation est bien montée.

Dans un mode de réalisation, la tête de la pièce de fixation comporte au moins une contre-forme, destinée à loger le témoin lorsque le témoin entre dans la position prédéfinie, et à empêcher le témoin de se déplacer pendant un dévissage. Cette configuration permet qu'au dévissage la tête soit affleurant, pour des raisons d'ouillage.

De préférence, la contre-forme se trouve sur la position prédéfinie qui reçoit le témoin dans la position de montage. Avantageusement, chaque position prédéfinie comporte deux contre-formes pour loger le témoin de façon plus équilibrée.

Avantageusement, dans la position de montage de la pièce de fixation, une surface du témoin se confond avec une surface frontale de la tête, de sorte que les deux surfaces soient affleurantes. C'est-à-dire, il n'y a pas de marche entre la surface du témoin et la surface frontale de la tête. Par surface frontal de la tête, on entend la surface opposée à la surface arrière de la tête. Dans ce mode de réalisation, si la pièce de fixation n'est pas bien montée, l'opérateur peut le savoir en apercevant une surface non régulièrement plane de la tête par toucher la surface frontale, surtout quand la lumière de l'environnement pendant le procédé de fixation en utilisant la pièce de fixation selon la présente invention ne permet pas l'opérateur voit clairement.

Dans un mode de réalisation, le bras de la patte souple est solidaire de la surface arrière de la tête pour avoir une structure plus compacte de la pièce de fixation.

Avantageusement, la patte souple est positionnée du côté de la surface arrière de la tête, dans une position relâchée, c'est-à-dire, quand la pièce de fixation n'est pas montée dans la/les pièce(s) à fixer et/ou ne reçoit aucune contrainte. Cet arrangement permet que la patte souple n'empêche pas le procédé de montage et démontage de la pièce de fixation, ainsi que l'opérateur monte et démonte la pièce de fixation selon la présente invention comme une pièce de fixation classique dans l'art antérieur, et ni attention ni effort spécial et/ou supplémentaire est demandé.

Avantageusement, le bras de la patte souple s'étend vers le bord de la tête. Ainsi que le témoin, qui peut être lié à l'extrémité libre du bras, se trouve près du bord de la tête. Cela facilite la fabrication de la pièce de fixation selon la présente invention.

Dans un mode de réalisation, la pièce de fixation comporte au moins une paire de pattes souples. Les deux pattes souples de la paire de pattes souples s'étendent dans deux directions opposées. Ainsi, les deux témoins des deux pattes souples se trouvent dans deux côtés opposés de la tête, qui permet de montrer que la pièce de fixation est bien montée de façon équilibrée quand tous les deux témoins entrent dans les positions prédéfinies. De préférence, les deux pattes souples de la paire des pattes souples sont identiques. Cela facilite la fabrication de la pièce de fixation. Dans la position de bon montage, la tête de la pièce de fixation est parallèle à la surface de la pièce à fixer qui est en contact avec la tête, lorsque la surface de la pièce est régulièrement plane.

Dans un mode de réalisation, la forme de tête est ronde, et les deux pattes souples de la paire de pattes souples s'étendent dans deux directions diamétralement opposées.

Dans un mode de réalisation, la tête de la pièce de fixation a une empreinte pour recevoir un outil. Préférentiellement, l'outil reçu par l'empreinte est utilisé pour monter et/ou démonter la pièce de fixation. Cela facilite le montage et/ou démontage de la pièce de fixation.

Préférentiellement, l'empreinte se trouve au centre de la surface frontale de la tête.

Avantageusement, la pièce de fixation est fabriquée d'une matière plastique. Avantageusement, la pièce de fixation comporte des composants métaux, dits griffes, faisant saillie à partir de la tige et s'étendant vers la tête pour que la pièce de fixation se tient plus solide dans le trou de fixation des pièces à fixe.

### Brève description des figures

D'autres avantages, buts et caractéristiques de la présente invention ressortent de la description qui suit faite, dans un but explicatif et nullement limitatif, en regard des dessins annexés, dans lesquels :
La Figure 1 représente une vue de coupe de la première pièce et la deuxième pièce à fixer par une pièce de fixation selon un mode de réalisation, dans laquelle les deux pièces à fixer ont chacune un trou de fixation ;
La Figure 2 représente une vue en perspective d'une pièce de fixation selon un mode de réalisation ;
La Figure 3 représente une autre vue en perspective d'une pièce de fixation selon un mode de réalisation ;
La Figure 4 représente une vue latérale d'une pièce de fixation selon un mode de réalisation ;
La Figure 5 représente une vue de dessus d'une pièce de fixation selon un mode de réalisation ;
La Figure 6 représente une vue latérale d'une pièce de fixation selon un mode de réalisation de l'invention;
La Figure 7 représente une vue en détail de la zone A sur la Figure 6 ;
La Figure 8 représente une vue de coupe d'une pièce de fixation selon un mode de réalisation de l'invention, le rivet étant reçu dans un trou fileté;
La Figure 9 représente une vue similaire d'une pièce de fixation selon un mode de réalisation de l'invention, le rivet étant reçu dans un trou fileté;
La Figure 10 représente une vue en détail de la zone B sur la Figure 9;
La Figure 11 représente une vue en coupe de la partie double-tête d'une ailette selon un mode de réalisation.

### Description des modes de réalisation

Les différentes figures ainsi que les éléments d'une même figure ne sont pas nécessairement représentées à la même échelle. Sur l'ensemble des figures, les éléments identiques portent la même référence numérique.

La terminologie employée dans la présente description ne doit en aucun cas être interprétée de manière limitative ou restrictive, simplement parce qu'elle est employée en conjonction avec une description détaillée de certains modes de réalisation de l'invention.

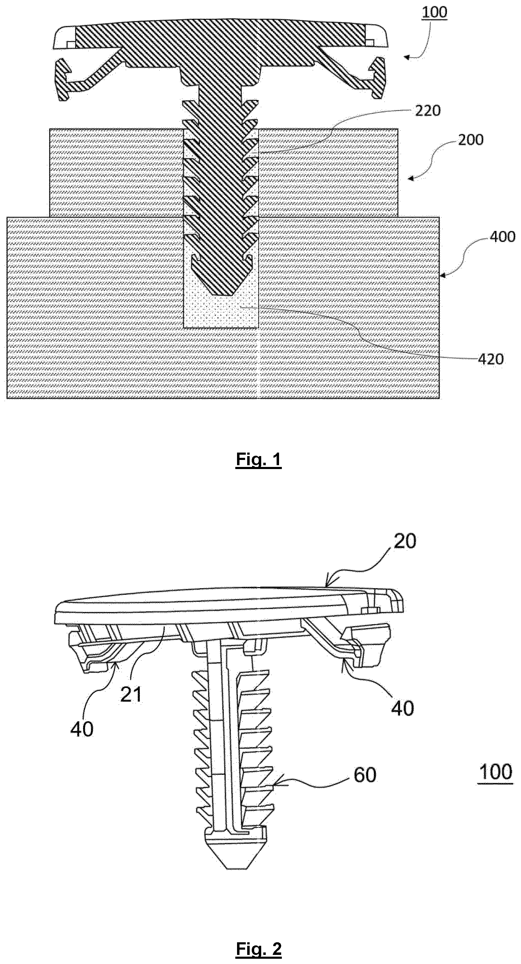

La Figure 1 représente une vue de coupe de la première pièce 200 et la deuxième pièce 400 à fixer par une pièce de fixation 100 selon un mode de réalisation qui n'est pas selon la présente invention. Sur la Figure 1, la pièce de fixation 100 n'est pas encore montée. De préférence, la première pièce 200 peut avoir un premier trou 220, ou une ouverture d'autre type, par exemple, une fente (non représentée dans la figure). La deuxième pièce 400 a un deuxième trou 420. À titre d'exemple uniquement, la première pièce 200 peut être un écrou de type M6x100, et la deuxième pièce 400 peut être une tôle sur laquelle l'écrou de type M6x100 est soudé.

La Figure 2 représente une vue en perspective d'une pièce de fixation 100 selon un mode de réalisation qui n'est pas selon la présente invention. La pièce de fixation 100 comporte un corps qui comprend une tête 20 et une tige 60. La tête 20 a une surface arrière 21 destinée à être positionnée en regard de la première pièce 200. La tige 60 s'étend à partir de la surface arrière 21 de la tête 20 et est destinée à être insérer dans le(s) trou(s) des pièces à assembler.

De préférence, la tête 20 est de forme ronde. De préférence, la tige 60 est de forme cylindrique.

Le terme "tige" utilisé dans cette description peut être techniquement substitué par les termes "tronc" ou "âme centrale".

Dans un mode de réalisation (non représenté), la pièce de fixation 100 comporte une seule patte souple 40. La patte souple 40 se déforme dans une position de montage, dans laquelle la première pièce 200 est fixée à la deuxième pièce 400 par la pièce de fixation 100. La déformation de la patte souple 40 permet à l'opérateur apercevoir visuellement que la pièce de fixation 100 est bien montée. Cette partie sera détaillée plus loin.

Dans un autre mode de réalisation, la pièce de fixation 100 comporte une paire de pattes souples 40, comme illustré sur la Figure 2. Avantageusement, la pièce de fixation 100 comporte multiple pattes souples 40, qui permet de mieux indiquer le bon montage de la pièce de fixation 100 quand la configuration des pièces à fixer est plus compliquée.

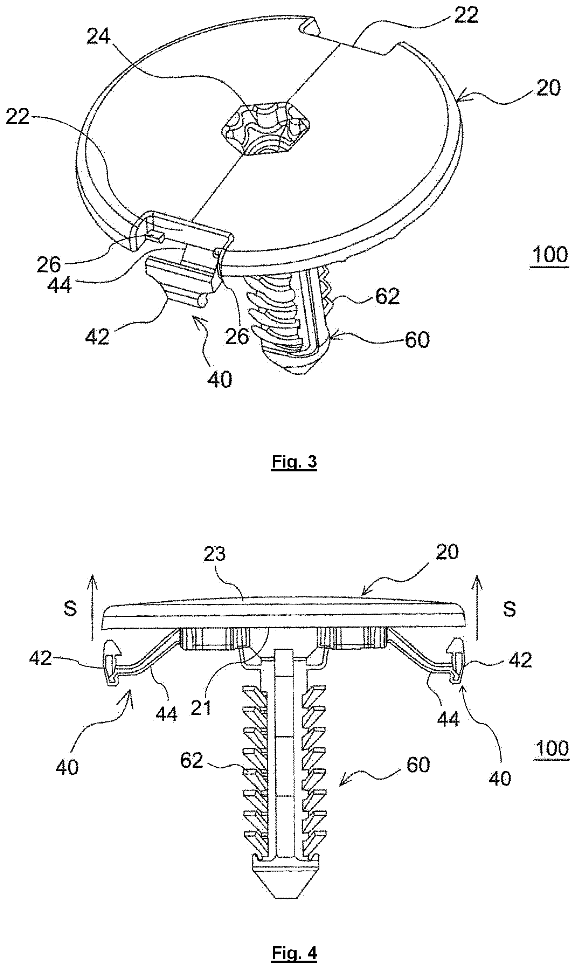

La Figure 3 représente une autre vue en perspective d'une pièce de fixation 100 selon un mode de réalisation qui n'est pas selon la présente invention. La patte souple 40 comprend un bras 44, préférentiellement élastique, et le bras 44 comporte un témoin 42.

Lorsque la pièce de fixation 100 est bien monté dans le trou de fixation des pièces à assembler, c'est-à-dire, quand la pièce de fixation 100 se trouve dans la position de montage, le bras 44 de la patte souple 40 se déforme de sorte que le témoin 42 entre dans une position prédéfinie par rapport à la tête 20. De préférence, la position prédéfinie est une encoche 22 sur la tête 20, comme illustré sur la Figure 3. La tête 20 peut avoir une ou deux ou plusieurs encoches. Sur la Figure 3, la tête 20 comprend une paire d'encoches 22. De préférence, le nombre d'encoche 22 est correspondant au nombre de témoin 42. Chaque encoche est destinée à recevoir l'un des témoins 42 dans la position de montage de la pièce de fixation 100.

Dans un mode de réalisation, la tête 20 comporte une contre-forme 26. De préférence, la contre-forme 26 se trouve dans la position prédéfinie qui reçoit le témoin 42 dans la position de montage. Avantageusement, chaque encoche 22 comporte deux contre-formes 26, comme illustré sur la Figure 3. Les contre-formes 26 permettent qu'au dévissage cela soit affleurant. Ces contre-formes 26 viennent en opposition au témoin 42. Le témoin 42 vient se loger contre les contre-formes. Cette forme est pour des raisons d'outillage. Des ailettes 62 sur la Figure 3 font saillie à partir de la tige 60.

La Figure 4 représente une vue latérale d'une pièce de fixation 100 selon un mode de réalisation. Les ailettes 62 servent de filetage qui empêche de retirer la pièce de fixation 100 et ainsi rends la fixation plus solide. De préférence, les ailettes 62 sont en forme de sapin pour garantir une fixation encore plus solide. À titre d'exemple uniquement, la tige 60 avec les ailettes 62 fonctionne comme la tige 60 du rivet sapin classique. Les ailettes 62 vont bloquer la pièce de fixation 100 en sortie. Par exemple, la pièce de fixation 100 avec les ailettes 62 de forme sapin peut être utilisée pour fixer un déflecteur plastique dans un trou taraudé M6x100 par clippage.

Comme illustré sur la Figure 4, une extrémité du bras 44 est solidaire du corps de la pièce de fixation 100. Avantageusement, le bras 44 est lié à la tête 20 au niveau de la surface arrière de la tête 20. De préférence, le bras 44 s'étend vers le bord de la tête 20. Ainsi, la structure de la pièce de fixation 100 est plus compacte.

Dans un mode de réalisation, la patte souple 40 est positionnée du côté de la surface arrière 21 de la tête 20 dans une position relâchée, quand le corps de la pièce de fixation 100 ne reçoit pas de force extérieure, comme illustré sur les Figures 1, 2, 3 et 4.

Préférentiellement, le témoin 42 est sur l'extrémité libre du bras pour avoir une configuration compacte de la pièce de fixation 100. De préférence, le témoin 42 est positionné du côté de la surface arrière de la tête 20, dans la position relâchée, comme illustré sur la Figure 4.

Dans un mode de réalisation, la pièce de fixation 100 comporte une paire de pattes souples 40. Comme illustré sur la Figure 4, les deux pattes souples 40 de la paire de pattes souples s'étendent dans deux directions opposées. Dans un mode de réalisation, quand la tête 20 est de forme ronde, les deux pattes souples 40 s'étendent dans deux directions diamétralement opposées. Cela rend l'opérateur plus assurant que la pièce de fixation 100 est bien monté d'une façon équilibrée.

Avantageusement, le bras 44 et/ou le témoin 42 rentre en contact avec au moins une des pièces à assembler dans la position de montage, et préférentiellement, le bras 44 et/ou le témoin 42 se déforme en contactant avec au moins une des pièces à assembler, de sorte que le témoin 42 monte dans un sens S, comme illustré sur la Figure 4. C'est-à-dire, le témoin 42 monte depuis le niveau de la surface arrière 21 vers une surface frontale 23 de la tête 20 qui est opposée à la surface arrière 21. Le mouvement du témoin 42 dans le sens S est plus visible que dans d'autres directions pour l'opérateur.

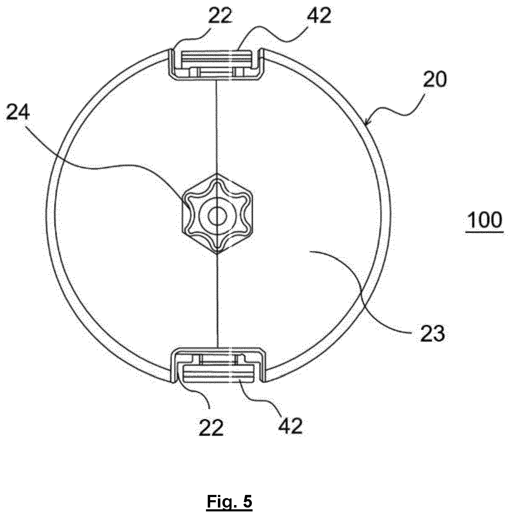

La Figure 5 illustre une vue de dessus d'une pièce de fixation 100 selon un mode de réalisation. Deux encoches 22 se trouve sur le bord de la tête 20. La tête 20 est de forme ronde dans ce mode de réalisation, et les deux encoches 22 sont diamétralement opposées. Les deux encoches 22, correspondantes aux positions prédéfinies dans lesquelles entre les témoins 42, reçoivent chacune un témoin 42 dans la position de montage.

Avantageusement, le témoin 42 se déplace jusqu'à ce qu'une surface du témoin 42, par exemple, une surface du témoin 42, se confond avec la surface frontale 23 de la tête 20 dans la position de montage de la pièce de fixation 100. De préférence, la surface du témoin 42 qui se confond avec la surface frontale 23 est la surface d'avant du témoin 42, qui est visible du côté de la surface frontale 23 comme illustrée sur la Figure 5. Si la pièce de fixation n'est pas bien montée, l'opérateur peut le savoir en apercevant une marche entre le témoin et la surface frontale de la tête par toucher la surface frontale. De préférence, le témoin 42 est en butée dans la position de montage.

Avec ce mouvement, une fois le témoin 42 est en butée, l'opérateur s'assure visuellement que la pièce de fixation est bien montée.

Dans un mode de réalisation, la tête 20 a une empreinte 24 pour recevoir un outil. Avantageusement, l'empreinte 24 se trouve sur la surface frontale 23 de la tête 20, de préférence, au centre de la tête 20, comme illustré sur les Figures 4 et 5. À titre d'exemple uniquement, l'empreinte est de type TORX T30, à recevoir un outil correspondant, pour le montage et/ou le démontage de la pièce de fixation 100.

Avantageusement, une fois la pièce de fixation 100 est dévissée, la pièce de fixation 100 est susceptible à être clippée de nouveau.

De préférence, la pièce de fixation est fabriquée d'une matière plastique. La pièce de fixation 100 selon l'invention peut être fabriquée par moulage de matière plastique connue, par exemple par injection thermoplastique, plus particulièrement en plastiques techniques tels que des polyamides, des résines d'acétal, des polyesters thermoplastiques. Avantageusement, la pièce de fixation 100 est de matériaux connus permettant de résister au vieillissement et à la température, et en même temps permettant que la patte souple 40 se déforme, et préférentiellement, la déformation de la patte souple 40 est élastique.

Dans un mode de réalisation, la tige 60 comporte des ailettes supplémentaires en métal, dits griffes, font saillie à partir de la surface de la tige 60 et s'étendent vers la tête 20. Les ailettes supplémentaires en métal peuvent être intégrées dans la tige 60 selon les techniques connues, par exemple le moulage par surmoulage, l'assemblage mécanique ou encore soudure ultrasonique.

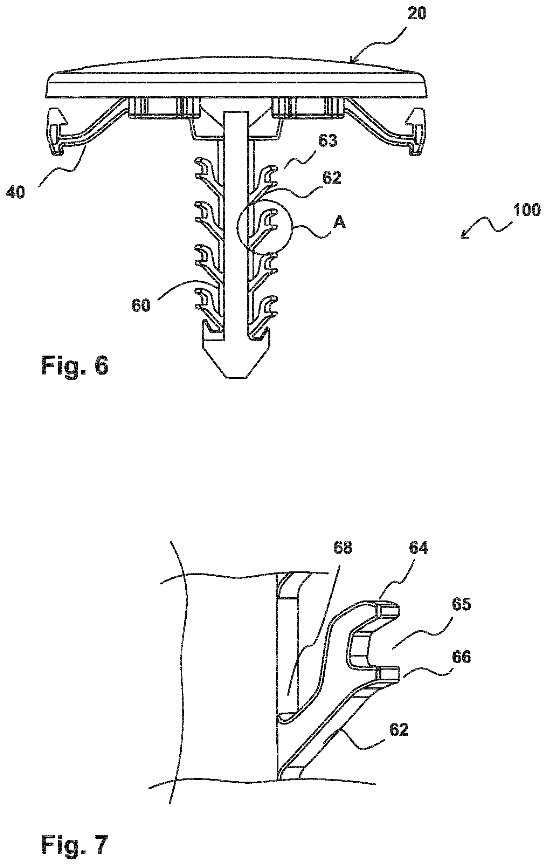

La Figure 6 représente une vue latérale d'une pièce de fixation 100 selon un autre mode de réalisation de la présente invention. La pièce de fixation 100 comporte un corps qui comprend une tête 20 et une tige 60. La tête 20 a une surface arrière 21 destinée à être positionnée en regard de la première pièce 200. La tige 60 s'étend à partir de la surface arrière 21 de la tête 20 et est destinée à être insérer dans le(s) trou(s) des pièces à assembler.

De préférence, la tête 20 est de forme ronde. De préférence, la tige 60 est de forme cylindrique.

La tige 60 comporte des ailettes d'accroche 62 qui font saillie à partir de la tige 60. Au moins une ailette d'accroche 62 comporte, à son extrémité libre, une double-tête 63 servant de filetage.

Le terme " ailette d'accroche" utilisé dans cette description est techniquement interchangeable avec le terme " ailette ".

La portion des ailettes d'accroche 62 ayant une double-tête 63 peut être défini en fonction de besoin. Dans un mode de réalisation préféré, chaque ailette d'accroche 62 est munie d'une une double-tête 63.

Avantageusement, la présence de double-tête à l'extrémité d'une ailette permet d'avoir une meilleure rigidité de fin de lame de clippage.

De préférence et de manière optionnelle, la tête 20 et les pattes souples peuvent reproduire les mêmes caractéristiques décrites plus haut et illustrées sur les Figures 1 à 5, sans qu'elles soient répétées ici.

De manière générale, les ailettes 62 sont en forme de sapin. Les ailettes 62 en forme de sapin permet de garantir une fixation solide. Les ailettes 62 en forme de sapin classique vont maintenir la pièce de fixation 100 dans un trou. Par exemple, la pièce de fixation 100 avec les ailettes 62 de forme sapin peut être utilisée pour fixer un déflecteur plastique dans un trou taraudé.

Les avantages et les effets techniques d'avoir des ailettes à double-tête seront détaillés plus loin.

La Figure 7 représente une vue en détail de la zone A sur la Figure 6.

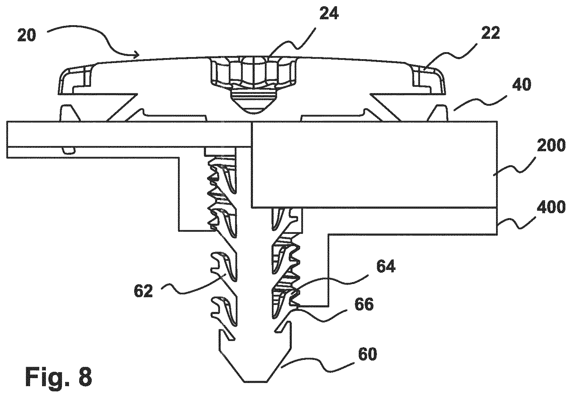

On observe que la double-tête 63 comporte une tête supérieure 64 et une tête inférieure 66 séparées par un espace intermédiaire 65, ces deux têtes 64, 66 définissant un pas de filetage. Ceci sera expliqué plus loin avec la Figure 8.

De préférence, au moins une ailette d'accroche 62 comporte une zone fine 68 entre la tige 60 et la double-tête 63. Par « zone fine », on entend une largeur réduite par rapport à la double-tête 63.

Le fait d'avoir une extrémité de double-tête 63 rend la longueur de la zone fine 68 plus courte qu'une ailette sans double-tête par exemple. Avantageusement, la compression et déformation jusqu'à rupture des ailettes est retardée, ceci permettant ainsi une accroche plus robuste lors de l'arrachement du rivet 100.

La Figure 8 représente une vue de coupe d'une pièce de fixation selon un mode de réalisation, le rivet étant reçu dans un trou fileté. On observe que le rivet 100 est reçu dans le trou taraudé, avec les têtes supérieures 64 et inférieures 66 dans les rainures hélicoïdales du trou taraudé. La double-tête permet d'avoir un nombre deux fois plus important de points de contact entre le rivet 100 et le trou des pièces à fixer. Avantageusement, ceci permet de créer un double accroche dans le filet. Cette double préhension est particulièrement avantageuse et offre notamment une meilleure tenue à l'arrachement.

Dans un mode de réalisation et plus particulièrement, la tête inférieure 66 joue un rôle prépondérant dans la résistance à l'arrachement du rivet 100. En parallèle, la tête supérieure 64 apporte une retenue supplémentaire pour renforcer cette tenue.

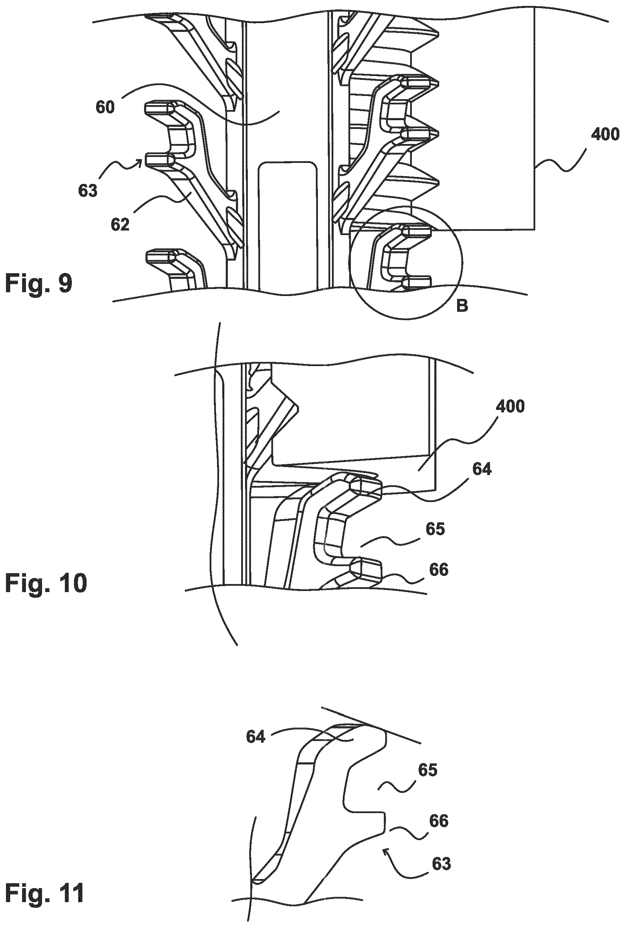

La Figure 9 représente une vue similaire d'une pièce de fixation selon un mode de réalisation, le rivet étant reçu dans un trou fileté. La Figure 10 représente une vue en détail de la zone B sur la Figure 9;

De préférence, la tête supérieure 64 présente une forme permettant le dévissage ou une simple traction du rivet 100. Par exemple, la tête supérieure 64 est pourvue d'une surface supérieure inclinée qui accompagne le chanfrein d'entrée de l'écrou.

Ceci permet d'avoir également une meilleure possibilité de dévissage.

Ceci est particulièrement avantageux pour les trous débouchants. En fait, avec un trou débouchant, les ailettes du sapin sans double-tête peuvent poser un problème lorsqu'elles dépassent de l'écrou à l'opposé, c'est-à-dire, lorsque les ailettes de la vis dépassent de l'autre côté de l'écrou. Dans cette situation, une simple traction pourrait causer une déformation des ailettes, ce qui rendrait difficile leur réinsertion dans l'écrou.

Avantageusement, la partie supérieure de la tête supérieure 64 a une géométrie spécifique qui permet une insertion correcte tout en maintenant une force suffisante pour que les ailettes restent en prise dans le filet, agissant ainsi comme une vis. Cela signifie que la double-tête permet un emboîtement facile avec clippage tout en fournissant une bonne tenue à l'arrachement. Dans une solution sans double-tête, si ces ailettes ne nécessitent pas plus de force de montage que ce que ces ailettes peuvent générer dans le filet (force de retenue), elles risquent simplement de se déplacer à l'intérieur du filet, de ressortir et de finalement tourner dans le vide.

La Figure 11 représente une vue en coupe de la partie double-tête d'une ailette selon un mode de réalisation.

Dans un mode de réalisation exemplaire, la tête supérieure 64 est pourvue d'une surface supérieure présentant une pente, tel qu'illustré sur la Figure 11.

La surface supérieure de l'ailette présente une inclinaison descendante tandis que l'ailette elle-même est orientée vers la tête 20 du rivet 100.

Lorsque l'on observe la surface supérieure de l'ailette, on peut observer une pente ou une inclinaison qui s'incline vers le bas, c'est-à-dire qu'elle descend progressivement vers l'extrémité de la tête supérieure 64.

D'autres géométries adéquates de la surface supérieure de la tête supérieure 64 sont aussi envisageables.

### LISTE DES SIGNES DE RÉFÉRENCE

**[Tableaux 1]**

| Références | Désignations |
|---|---|
| 100 | Pièce de fixation |
| 20 | Tête |
| 21 | Surface arrière |
| 22 | Encoche |
| 23 | Surface frontale |
| 24 | Empreinte |
| 26 | Contre-forme |
| 40 | Patte souple |
| 42 | Témoin |
| 44 | Bras |
| 60 | Tige |
| 62 | Ailette ; Ailette d'accroche |
| 63 | Double-tête |
| 64 | Tête supérieure |
| 65 | Espace intermédiaire |
| 66 | Tête inférieure |
| 68 | Zone fine d'ailette |
| 200 | Première pièce |
| 220 | Première trou |
| 400 | Deuxième pièce |
| 420 | Deuxième trou |

## Revendications

1. Pièce de fixation (100) pour fixer une première pièce sur une deuxième pièce ayant un trou, la pièce de fixation (100) comporte un corps qui comprend :
- une tête (20) ayant une surface arrière destinée à être positionnée en regard de la première pièce, et
- une tige (60) s'étendant à partir de la surface arrière de la tête (20) et destinée à être insérée dans le trou ;
où la tige (60) comporte des ailettes (62) qui font saillie à partir de la tige (60), et où au moins une ailette (62) comporte, à son extrémité libre, une double-tête (63) servant de filetage ;
**caractérisée en ce qu'**elle comporte au moins une patte souple (40) qui comprend un bras (44) élastique dont une extrémité est solidaire du corps de la pièce de fixation (100), le bras (44) comportant un témoin (42) ;
et **en ce que** le bras (44) se déforme de sorte que le témoin (42) entre dans une position prédéfinie par rapport à la tête (20), lorsque la pièce de fixation (100) se trouve dans une position de montage dans laquelle la première pièce est fixée à la deuxième pièce par la pièce de fixation (100).

2. Pièce de fixation (100) selon la revendication 1, dans laquelle ladite au moins ailette (62) comporte une zone fine entre la tige (60) et la double-tête (63).

3. Pièce de fixation (100) selon l'une des revendications précédentes, dans laquelle la double-tête (63) comporte une tête supérieure (64) et une tête inférieure (65) séparées par un espace intermédiaire (65), ces deux têtes (64, 66) définissant un pas de filetage.

4. Pièce de fixation (100) selon l'une des revendications précédentes, dans laquelle les ailettes (62) sont en forme de sapin.

5. Pièce de fixation (100) selon l'une quelconque des revendications précédentes, dans laquelle la tête (20) comporte au moins une encoche (22), correspondante à la position prédéfinie, destinée à recevoir le témoin (42) dans la position de montage de la pièce de fixation (100).

6. Pièce de fixation (100) selon l'une quelconque des revendications précédentes, dans laquelle la tête (20) comporte une surface frontale opposée à la surface arrière, et une surface du témoin (42), dans la position de montage de la pièce de fixation (100), se confond avec la surface frontale de la tête (20).

7. Pièce de fixation (100) selon l'une quelconque des revendications précédentes, dans laquelle la tête (20) comporte au moins une contre-forme (26), destinée à loger le témoin (42) une fois que le témoin (42) entre dans la position prédéfinie, et à empêcher le témoin (42) de se déplacer pendant un dévissage.

8. Pièce de fixation (100) selon l'une quelconque des revendications précédentes, dans laquelle le bras (44) de la patte souple (40) est solidaire de la surface arrière de la tête (20).

9. Pièce de fixation (100) selon l'une quelconque des revendications précédentes, dans laquelle la patte souple (40) est positionnée du côté de la surface arrière de la tête (20).

10. Pièce de fixation (100) selon l'une quelconque des revendications précédentes, dans laquelle le bras (44) de la patte souple (40) s'étend vers le bord de la tête (20).

11. Pièce de fixation (100) selon l'une quelconque des revendications précédentes, comportant au moins une paire de pattes souples (40), dans lequel les deux pattes souples de la paire de pattes souples (40) s'étendent dans deux directions opposées.

12. Pièce de fixation (100) selon la revendication 10, comportant au moins une paire d'encoches (22), destinée à recevoir chacune une des témoins (42) dans la position de montage de la pièce de fixation (100).

13. Pièce de fixation (100) selon l'une des revendications précédentes, dans laquelle la tête (20) a une empreinte (24) pour recevoir un outil.

14. Pièce de fixation (100) selon l'une quelconque des revendications précédentes, étant fabriquée essentiellement d'une matière plastique.

15. Pièce de fixation (100) selon l'une quelconque des revendications précédentes, dans laquelle la tige (60) comporte des ailettes supplémentaires en métal, dits griffes, qui font saillie à partir de la surface de la tige (60) et s'étendent vers la tête (20).

## Patentansprüche

1. Befestigungsteil (100) zum Befestigen eines ersten Teils an einem zweiten Teil, das ein Öffnung aufweist, wobei das Befestigungsteil (100) einen Körper beinhaltet, der umfasst:
- einen Kopf (20), der eine hintere Oberfläche aufweist, die dazu bestimmt ist, dem ersten Teil zugewandt positioniert zu werden, und
- einen Schaft (60), der sich von der hinteren Oberfläche des Kopfes (20) erstreckt und dazu bestimmt ist, in das Öffnung eingeführt zu werden;
wobei der Schaft (60) von dem Schaft (60) hervorstehende Flügel (62) beinhaltet, und wobei mindestens ein Flügel (62) an seinem freien Ende einen Doppelkopf (63) beinhaltet, der als Gewinde dient;
**dadurch gekennzeichnet, dass** es mindestens eine flexible Lasche (40) beinhaltet, die einen elastischen Arm (44) umfasst, von dem ein Ende fest mit dem Körper des Befestigungsteils (100) verbunden ist, wobei der Arm (44) eine Indikator (42) beinhaltet;
und dadurch, dass sich der Arm (44) verformt, sodass die Indikator (42) in eine vordefinierte Position in Bezug auf den Kopf (20) eintritt, wenn sich das Befestigungsteil (100) in einer Montageposition befindet, in der das erste Teil durch das Befestigungsteil (100) an dem zweiten Teil befestigt ist.

2. Befestigungsteil (100) nach Anspruch 1, wobei der mindestens eine Flügel (62) einen dünnen Bereich zwischen dem Schaft (60) und dem Doppelkopf (63) beinhaltet.

3. Befestigungsteil (100) nach einem der vorstehenden Ansprüche, wobei der Doppelkopf (63) einen oberen Kopf (64) und einen unteren Kopf (65) beinhaltet, die durch einen Zwischenraum (65) getrennt sind, wobei diese beiden Köpfe (64, 66) eine Gewindesteigung definieren.

4. Befestigungsteil (100) nach einem der vorstehenden Ansprüche, wobei die Flügel (62) tannenbaumförmig sind.

5. Befestigungsteil (100) nach einem der vorstehenden Ansprüche, wobei der Kopf (20) mindestens eine der vordefinierten Position entsprechende Kerbe (22) beinhaltet, die dazu bestimmt ist, die Indikator (42) in der Montageposition des Befestigungsteils (100) aufzunehmen.

6. Befestigungsteil (100) nach einem der vorstehenden Ansprüche, wobei der Kopf (20) eine der hinteren Oberfläche gegenüberliegende vordere Oberfläche beinhaltet und eine Oberfläche der Indikator (42) in der Montageposition des Befestigungsteils (100) mit der vorderen Oberfläche des Kopfes (20) zusammenfällt.

7. Befestigungsteil (100) nach einem der vorstehenden Ansprüche, wobei der Kopf (20) mindestens eine Gegenform (26) beinhaltet, die dazu bestimmt ist, die Indikator (42) aufzunehmen, sobald die Indikator (42) in die vordefinierte Position gelangt, und zu verhindern, dass sich die Indikator (42) während eines Abschraubens bewegt.

8. Befestigungsteil (100) nach einem der vorstehenden Ansprüche, wobei der Arm (44) der flexiblen Lasche (40) fest mit der hinteren Oberfläche des Kopfes (20) verbunden ist.

9. Befestigungsteil (100) nach einem der vorstehenden Ansprüche, wobei die flexible Lasche (40) auf Seiten der hinteren Oberfläche des Kopfes (20) positioniert ist.

10. Befestigungsteil (100) nach einem der vorstehenden Ansprüche, wobei sich der Arm (44) der flexiblen Lasche (40) in Richtung des Randes des Kopfes (20) erstreckt.

11. Befestigungsteil (100) nach einem der vorstehenden Ansprüche, das mindestens ein Paar flexibler Laschen (40) beinhaltet, wobei sich die beiden flexiblen Laschen des Paares flexibler Laschen (40) in zwei entgegengesetzten Richtungen erstrecken.

12. Befestigungsteil (100) nach Anspruch 10, das mindestens ein Paar Kerben (22) beinhaltet, das dazu bestimmt ist, jeweils eine der Indikatorn (42) in der Montageposition des Befestigungsteils (100) aufzunehmen.

13. Befestigungsteil (100) nach einem der vorstehenden Ansprüche, wobei der Kopf (20) einen Abdruck (24) zur Aufnahme eines Werkzeugs aufweist.

14. Befestigungsteil (100) nach einem der vorstehenden Ansprüche, das im Wesentlichen aus einem Kunststoff hergestellt ist.

15. Befestigungsteil (100) nach einem der vorstehenden Ansprüche, wobei der Schaft (60) zusätzliche Metallflügel, Krallen genannt, beinhaltet, die von der Oberfläche des Schafts (60) hervorstehen und sich in Richtung des Kopfes (20) erstrecken.

## Claims

1. A fastening part (100) for fastening a first part to a second part having a hole, the fastening part (100) includes a body which comprises:
- a head (20) having a rear surface intended to be positioned opposite the first part, and
- a shank (60) extending from the rear surface of the head (20) and intended to be inserted into the hole;
wherein the shank (60) includes fins (62) which project from the shank (60), and wherein at least one fin (62) includes, at its free end, a double-head (63) serving as a thread;
**characterised in that** the fastening part includes at least one flexible tab (40) which comprises an elastic arm (44) one end of which is secured to the body of the fastening part (100), the arm (44) including a control (42);
and **in that** the arm (44) deforms so that the control (42) fits in a predefined position with respect to the head (20), when the fastening part (100) is in a mounting position in which the first part is fastened to the second part by the fastening part (100).

2. The fastening part (100) according to claim 1, wherein said at least one fin (62) includes a thin area between the shank (60) and the double-head (63).

3. The fastening part (100) according to one of the preceding claims, wherein the double-head (63) includes an upper head (64) and a lower head (65) separated by an intermediate space (65), these two heads (64, 66) defining a thread pitch.

4. The fastening part (100) according to one of the preceding claims, wherein the fins (62) are fir tree like shaped.

5. The fastening part (100) according to any one of the preceding claims, wherein the head (20) includes at least one notch (22), corresponding to the predefined position, intended to receive the control (42) in the mounting position of the fastening part (100).

6. The fastening part (100) according to any one of the preceding claims, wherein the head (20) includes a front surface opposite to the rear surface, and a surface of the control (42), in the mounting position of the fastening part (100), is coincident with the front surface of the head (20).

7. The fastening part (100) according to any one of the preceding claims, wherein the head (20) includes at least one setback (26), intended to accommodate the control (42) once the control (42) fits in the predefined position, and to prevent the control (42) from moving during unscrewing.

8. The fastening part (100) according to any one of the preceding claims, wherein the arm (44) of the flexible tab (40) is secured to the rear surface of the head (20).

9. The fastening part (100) according to any one of the preceding claims, wherein the flexible tab (40) is positioned on the side of the rear surface of the head (20).

10. The fastening part (100) according to any one of the preceding claims, wherein the arm (44) of the flexible tab (40) extends toward the edge of the head (20).

11. The fastening part (100) according to any one of the preceding claims, including at least one pair of flexible tabs (40), wherein the two flexible tabs of the pair of flexible tabs (40) extend in two opposite directions.

12. The fastening part (100) according to claim 10, including at least one pair of notches (22), each intended to receive one of the controls (42) in the mounting position of the fastening part (100).

13. The fastening part (100) according to one of the preceding claims, wherein the head (20) has an imprint (24) for receiving a tool.

14. The fastening part (100) according to any one of the preceding claims, being manufactured essentially of a plastic material.

15. The fastening part (100) according to any one of the preceding claims, wherein the shank (60) includes additional fins made of metal, so-called claws, project from the surface of the shank (60) and extend towards the head (20).
